# EUROPÄISCHE PATENTSCHRIFT

(11) **EP 0 506 615 B1**
(45) Veröffentlichungstag und Bekanntmachung des Hinweises auf die Patenterteilung: **22.02.1995**
(21) Anmeldenummer: 92810200.3
(22) Anmeldetag: 19.03.1992
(51) Int. Cl.: C08K 5/3492, C08L 33/12

(54) **Stabilisierte Methylmethacrylat-Polymere**
Stabilized methylmethacrylate polymers
Polymères de méthyleméthacrylate stabilisés

(30) Priorität: 27.03.1991 CH 938/91
(43) Veröffentlichungstag der Anmeldung: 30.09.1992
(73) Patentinhaber: CIBA-GEIGY AG, 4002 Basel (CH)
(72) Erfinder: Michaelis, Peter, Dr., W-7800 Freiburg (DE)

(56) Entgegenhaltungen:
- EP-A- 0 434 608
- CH-A- 484 695
- US-A- 3 118 887
- US-A- 3 284 394
- US-A- 4 619 956

## Beschreibung

Die Erfindung betrifft stabilisierte Methylmethacrylat-Homo- und Copolymere, die als Stabilisator ein 2-Hydroxyphenyl-s-triazin mit bestimmten Substituenten enthalten.

Es ist bekannt, Polymere gegen Schädigung durch Licht, Sauerstoff und Wärme durch den Zusatz eines 2-Hydroxyphenyl-s-triazins der Formel 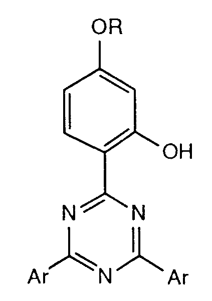
zu stabilisieren, wobei R Wasserstoff oder ein organischer Rest sein kann und Ar aromatische Reste sind, die keine Hydroxylgruppen tragen, siehe US-A-3 244 708 und CH-B-480 091. Solche Verbindungen sind UV-Absorber und wurden auch zum Stabilisieren von Photomaterialien (US-A-3 843 371) oder von Lacken (US-A-4 619 956) vorgeschlagen.

Hierbei wurden vorwiegend solche Triazinderivate verwendet, worin Ar ein 2,4-Dimethylphenylrest ist, weil diese Verbindungen relativ gut zugänglich sind. Neuerdings wurden Syntheseverfahren entwickelt, die auch solche Triazine mit anderen Arylresten gut zugänglich machen (EP-A-395 938).

Ueberraschend wurde nun gefunden, dass solche Triazine, in denen Ar ein Phenyl- oder p-Tolylrest ist, in Methylmethacrylat-Homo- und Copolymeren eine besonders gute Stabilisatorwirkung zeigen, die diejenige von Triazinen, in denen Ar ein 2,4-Dimethylphenylrest ist, klar übertrifft.

Die Erfindung betrifft daher eine gegen Schädigung durch Licht, Sauerstoff und Hitze stabilisierte Polymerzusammensetzung, enthaltend
a) ein Methylmethacrylat-Homopolymer oder ein Copolymer, das mindestens 80 % Methylmethacrylat in polymerisierter Form enthält, und
b) als Stabilisator mindestens eine Hydroxyphenyltriazin-Verbindung der Formel I 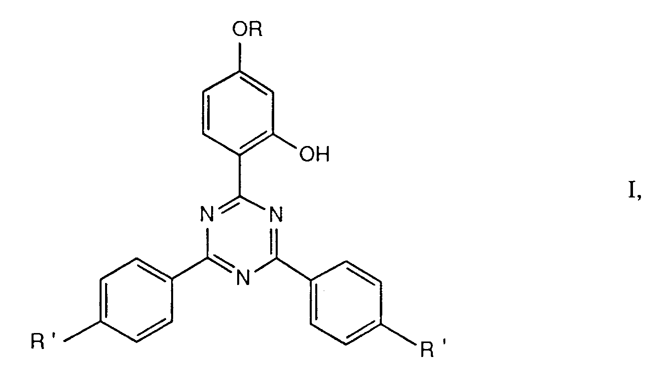 worin R Wasserstoff, C₁-C₁₈-Alkyl, durch Halogen oder C₁-C₁₂-Alkoxy substituiertes C₂-C₆-Alkyl oder Benzyl bedeutet und
   R' Wasserstoff oder Methyl bedeutet.

Das Methylmethacrylat-Homo- und Copolymer kann ein Massepolymerisat, ein Suspensionspolymerisat oder ein sonstiges Polymerisat sein. Das Copolymer kann als Comonomer z.B. ein Alkylacrylat, Acrylnitril, Styrol oder α-Methylstyrol enthalten. Es kann auch ein Pfropfcopolymerisat sein. Das Methylmethacrylat-Homo- oder Copolymer kann im Gemisch (Polyblend) mit einen anderen Polymer vorliegen, z.B. mit einem elastischen Polymer gemischt als "schlagfestes Polymethylmethacrylat". Bevorzugt ist die Komponente a) ein Methylmethacrylat-Homopolymer.

Die Verbindungen der Formel I sind UV-Absorber, sind sehr licht- und temperaturstabil. Sie sind in Polymethylmethacrylat auch sehr migrations- und extraktionsbeständig.

Wenn in der Formel I R C₁-C₁₈-Alkyl ist, so kann dies lineares oder verzweigtes Alkyl sein und kann z.B. Methyl, Ethyl, Propyl, Isopropyl, Butyl, Isobutyl, Pentyl, Hexyl, 2-Ethylbutyl, Heptyl, Octyl, 2-Ethylhexyl, Nonyl, Decyl, Dodecyl, Tetradecyl oder Octadecyl sein. R als durch Halogen oder C₁-C₁₂-Alkoxy substituiertes C₂-C₆-Alkyl kann z.B. 2-Chlorethyl, 2-Fluorethyl, 2-Methoxyethyl, 2-Ethoxyethyl, 2-Isopropoxyethyl, 2-Methoxypropyl, 3-Butoxypropyl, 2-Butoxyethyl, 2-Hexyloxyethyl, 2-Octyloxyethyl oder 2-Dodecyloxyethyl sein.

Bevorzugt ist R C₁-C₁₂-Alkyl oder Benzyl; R' hat bevorzugt die Bedeutung von Wasserstoff.

Besonders bevorzugt sind solche Polymerzusammensetzungen, worin die Komponente b) eine Verbindung der Formel I ist und R C₁-C₈-Alkyl und R' Wasserstoff bedeutet.

Beispiele für Verbindungen der Formel I sind:
2,4-Diphenyl-6-(2-hydroxy-4-methoxyphenyl)-1,3,5-triazin
2,4-Diphenyl-6-(2-hydroxy-4-ethoxyphenyl)-1,3,5-triazin
2,4-Diphenyl-6-(2-hydroxy-4-propyloxyphenyl)-1,3,5-triazin
2,4-Diphenyl-6-(2-hydroxy-4-butoxyphenyl)-1,3,5-triazin
2,4-Diphenyl-6-(2-hydroxy-4-hexyloxyphenyl)-1,3,5-triazin
2,4-Diphenyl-6-(2-hydroxy-4-octyloxyphenyl)-1,3,5-triazin
2,4-Diphenyl-6-(2-hydroxy-4-dodecyloxyphenyl)-1,3,5-triazin
2,4-Diphenyl-6-(2-hydroxy-4-benzyloxyphenyl)-1,3,5-triazin
2,4-Diphenyl-6-(2-hydroxy-4-(2-butoxyethoxy)phenyl)-1,3,5-triazin
2,4-Di-p-tolyl-6-(2-hydroxy-4-methoxyphenyl)-1,3,5-triazin
2,4-Di-p-tolyl-6-(2-hydroxy-4-propyloxyphenyl)-1,3,5-triazin
2,4-Di-p-tolyl-6-(2-hydroxy-4-butoxyphenyl)-1,3,5-triazin
2,4-Di-p-tolyl-6-(2-hydroxy-4-hexyloxyphenyl)-1,3,5-triazin
2,4-Di-p-tolyl-6-(2-hydroxy-4-pentoxyphenyl)-1,3,5-triazin
2,4-Di-p-tolyl-6-(2-hydroxy-4-octyloxyphenyl)-1,3,5-triazin
2,4-Di-p-tolyl-6-(2-hydroxy-4-benzyloxyphenyl)-1,3,5-triazin
2,4-Di-p-tolyl-6-(2-hydroxy-4-(2-hexyloxyethoxy)phenyl)-1,3,5-triazin
Die Verbindungen der Formel I sind bekannte Verbindungen oder können in Analogie zu bekannten Verbindungen hergestellt werden. Die Herstellung kann prinzipiell durch Veretherung der entsprechenden 2,4-Diaryl-6-(2,4-dihydroxyphenyl)-1,3,5-triazine geschehen. Die Veretherung erfolgt selektiv in 4-Stellung, weil die OH-Gruppe in 2-Stellung durch Wasserstoffbrückenbindung sterisch gehindert ist. Die Herstellung der 2,4-Dihydroxyphenyltriazine und ihre Veretherung ist z.B. beschrieben in Helv. Chim. Acta 55 (1972), 1566-91; EP-A-395 938; US-A-3 118 887; US-A-3 242 175 oder US-A-3 244 708.

Die Menge des zu verwendenden Stabilisators richtet sich nach der beabsichtigten Verwendung des stabilisierten Polymeren. Im allgemeinen enthält die erfindungsgemässe Polymerzusammensetzung auf 100 Gew.-Teile des Polymeren (Komponente a) 0,1 bis 5 Gew.-Teile des Stabilisators (Komponente b).

Der Stabilisator (Komponente b) kann auch ein Gemisch sein von zwei oder mehr Verbindungen der Formel I. Ausser dem Stabilisator der Formel I kann die Polymerzusammensetzung auch andere bekannte Stabilisatoren enthalten, wie z.B. Antioxidantien, Lichtschutzmittel, Metalldesaktivatoren oder Phosphite. Beispiele hierfür sind die folgenden Verbindungen.
1. Antioxidantien
   1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert.-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol, 2,6-Di-tert.-butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.
   1.4. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis-(2,6-dimethyl-4-hydroxyphenyl)-disulfid.
   1.5. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.
   1.6. O-, N- und S-Benzylverbindungen, z.B. 3,5,3',5'-Tetra-tert.-butyl-4,4'-dihydroxy-dibenzylether, Octadecyl-4-hydroxy-3,5-dimethylbenzyl-mercaptoacetat, Tris-(3,5-di-tert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Isooctyl-3,5-di-tert.-butyl-4-hydroxybenzyl-mercaptoacetat.
   1.7. Hydroxybenzylierte Malonate, z.B. Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.
   1.8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.
   1.9. Triazinverbindungen, z.B. 2,4-Bis-octylmercapto-6-(3,5-di-tert.-butyl-4-hydroxyanilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 2,4,6-Tris-(3,5-di-tert.-butyl-4-hydroxyphenylethyl)-1,3,5-triazin, 1,3,5-Tris-(3,5-di-tert.butyl-4-hydroxyphenylpropionyl)-hexahydro-1,3,5-triazin, 1,3,5-Tris-(3,5-dicyclohexyl-4-hydroxybenzyl)-isocyanurat.
   1.10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.
   1.12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert.Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert.-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
   2.1. 2-(2'-Hydroxyphenyl)-benztriazole, wie z.B. das 5'-Methyl-,3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw.-butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).
   2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
   2.8. Weitere 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-dodecyloxyphenyl)-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

Von besonderer Bedeutung ist die Kombination der Triazine der Formel I mit sterisch gehinderten Aminen. Darunter sind insbesondere solche Verbindungen zu Verstehen, die mindestens eine Gruppe der Formel 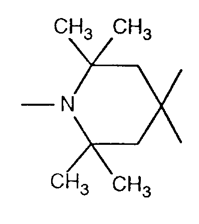
enthalten. Beispiele solcher Stabilisatoren sind oben unter Punkt 2.6 aufgeführt. Ebenfalls von besonderer Bedeutung ist die Kombination der Triazine der Formel I mit phenolischen Antioxidantien.

Ausser solchen Costabilisatoren können die Polymergemische noch andere Zusätze enthalten, wie z.B. Gleitmittel, Pigmente, Farbstoffe, Optische Aufheller, Flammschutzmittel, Antistatika oder Treibmittel.

Der Zusatz des Stabilisators und gegebenenfalls weiterer Zusätze zum Polymeren kann vor der formgebundenen Verarbeitung erfolgen, beispielsweise durch Mischen der pulverförmigen Komponenten oder durch Zusatz des Stabilisators zur Schmelze oder Lösung des Polymeren. Geschieht die Formgebung bereits bei der Polymerisation (wie z.B. bei der Herstellung von Acrylglasplatten) so setzt man die Stabilisatoren dem Monomeren zu.

Die Erfindung betrifft daher auch ein Verfahren zum Stabilisieren von Methylmethacrylat-Homopolymeren oder Copolymeren, die mehr als 80 % Methylmethacrylat enthalten, gegen deren Schädigung durch Licht, Sauerstoff und Hitze, durch Zusatz eines Stabilisators vor oder nach der Polymerisation, das dadurch gekennzeichnet ist, dass man als Stabilisator mindestens eine Verbindung der Formel I verwendet.

Die so stabilisierten Polymeren können in verschiedener Form verwendet werden, beispielsweise in Form von Platten, Profilen, Filmen, Rohren oder sonstigen Formkörpern.

Die so stabilisierten Polymeren zeichnen sich aus durch hohe Witterungsbeständigkeit, vor allem durch hohe Beständigkeit gegen UV-Licht. Sie behalten dadurch auch im Aussengebrauch lange Zeit ihre mechanischen Eigenschaften sowie ihre Transparenz und ihren Glanz.

Die folgenden Beispiele erläutern die Erfindung näher, Darin beziehen sich Teile und Prozente auf Gewichtsteile und Gewichtsprozente.

### Beispiel 1: UV-Beständigkeit der Stabilisatoren

15 g Polymethylmethacrylat (Plex® 8704, Röhm & Haas A.G.) und 60 mg der in Tabelle 1 aufgeführten Stabilisatoren (entsprechend 0,4 % Stabilisator) werden in 85 g Methylenchlorid bei Raumtemperatur gelöst. Aus dieser Lösung werden auf Glasplatten Filme gezogen, die nach Verdunsten des Lösungsmittels und Trocknung im Vakuum eine Dicke von 30 »m haben.

Die Filme werden von den Glasplatten abgezogen und in Kartonrahmen (6 x 3 cm) gespannt. Diese Proben werden in einem UV-Belichtungsgerät mit 5 Leuchtstofflampen TL/09 und 5 Lampen TL/12, die 20 cm über den Proben montiert sind, 3 Monate bestrahlt. In regelmässigen Abständen wird bei der Wellenlänge der maximalen Extinktion die UV-Absorption gemessen. Tabelle 1 zeigt die erhaltenen Daten im Verhältnis zur UV-Absorption der unbestrahlten Probe.

Folgende Stabilisatoren werden verwendet:
UV-1 2,4-Diphenyl-6-(2-hydroxy-4-methoxy)-1,3,5-triazin
HALS 1: Bis-(1,2,2,6,6-pentamethyl-4-piperidyl)-sebacat
V-1: 2,4-Di(2,4-dimethylphenyl)-6-(2-hydroxy-4-octyloxy)-1,3,5-triazin (Vergleich)

**Tabelle 1**

| UV-Absorption der Filmprobe nach der angegebenen Bestrahlungsdauer (unbestrahlte Probe = 100 %) | | | | | | | |
|---|---|---|---|---|---|---|---|
| Stabilisator | Wochen UV-Bestrahlung | | | | | | |
| | 1 | 3 | 5 | 7 | 9 | 11 | 13 |
| 0,4 % UV-1 | 102 | 100 | 96,6 | 94,2 | 88,9 | 84,9 | 79,8 |
| 0,2 % UV-1+ 0,2 % HALS-1 | 103 | 102 | 100 | 99,9 | 98,2 | 97,8 | 95,9 |
| 0,4 % V-1 | 101 | 90,9 | 75,9 | 64,6 | 52,7 | 43,5 | 32,7 |

## Patentansprüche

1. Gegen Schädigung durch Licht, Sauerstoff und Hitze stabilisierte Polymerzusammensetzung, enthaltend
a) ein Methylmethacrylat-Homopolymer oder ein Copolymer, das mindestens 80 % Methylmethacrylat in polymerer Form enthält, und
b) als Stabilisator mindestens eine Hydroxyphenyltriazin-Verbindung der Formel I, 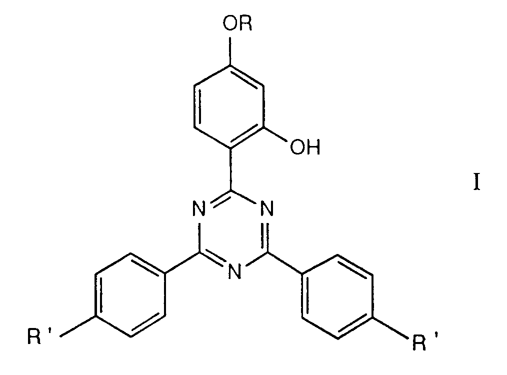 worin R Wasserstoff, C₁-C₁₈-Alkyl, durch Halogen oder C₁-C₁₂-Alkoxy substituiertes C₂-C₆-Alkyl oder Benzyl bedeutet und
R' Wasserstoff oder Methyl bedeutet.

2. Polymerzusammensetzung gemäss Anspruch 1, dadurch gekennzeichnet, dass die Komponente a) ein Methylmethacrylat-Homopolymer ist.

3. Polymerzusammensetzung gemäss Anspruch 1, dadurch gekennzeichnet, dass die Komponente b) eine Verbindung der Formel I ist, worin R C₁-C₁₂-Alkyl oder Benzyl ist.

4. Polymerzusammensetzung gemäss Anspruch 1, dadurch gekennzeichnet, dass die Komponente b) eine Verbindung der Formel I ist, worin R C₁-C₈-Alkyl ist und R' Wasserstoff bedeutet.

5. Polymerzusammensetzung gemäss Anspruch 1, enthaltend auf 100 Gew.-Teile des Polymeren der Komponente a) 0,1 bis 5 Gew.-Teile des Stabilisators der Komponente b).

6. Polymerzusammensetzung gemäss Anspruch 1, enthaltend ausser den Komponenten a) und b) einen oder mehrere andere Stabilisatoren oder sonstige Zusätze.

7. Polymerzusammensetzung gemäss Anspruch 6, enthaltend ausser den Komponenten a) und b) mindestens ein Lichtschutzmittel vom Typ der sterisch gehinderten Amine.

8. Verfahren zum Stabilisieren von Methylmethacrylat-Homopolymeren oder Copolymeren, die mindestens 80 % Methylmethacrylat enthalten, gegen deren Schädigung durch Licht, Sauerstoff und Hitze, durch Zusatz eines Stabilisators vor oder nach der Polymerisation, dadurch gekennzeichnet, dass man als Stabilisator mindestens eine Verbindung der Formel I gemäss Anspruch 1 verwendet.

9. Ein geformter Gegenstand enthaltend die in Anspruch 1 definierte Polymerzusammensetzung.

10. Ein geformter Gegenstand gemäss Anspruch 9 in der Form einer Platte oder eines Filmes.

## Claims

1. A polymer composition which is stabilised against damage by light, oxygen and heat, comprising
a) a methyl methacrylate homopolymer or a copolymer which contains at least 80% of methyl methacrylate in polymeric form, and
b) as stabiliser, at least one hydroxyphenyltriazine compound of formula I 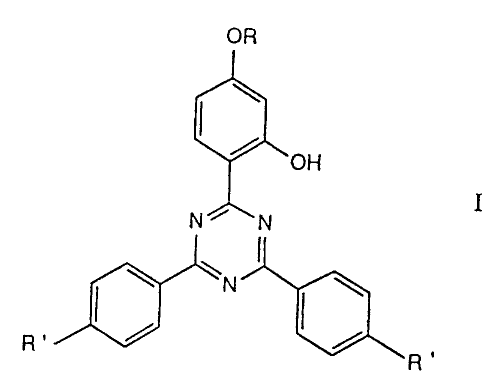 in which R is hydrogen, C₁-C₁₈alkyl, halogen- or C₁-C₁₂alkoxy-substituted C₂-C₆alkyl or benzyl, and
R' is hydrogen or methyl.

2. A polymeric composition according to claim 1, wherein component a) is a methyl methacrylate homopolymer.

3. A polymer composition according to claim 1, wherein component b) is a compound of formula I in which R is C₁-C₁₂alkyl or benzyl.

4. A polymer composition according to claim 1, wherein component b) is a compound of formula I in which R is C₁-C₈alkyl and R' is hydrogen.

5. A polymer composition according to claim 1, comprising 0.1 to 5 parts by weight of the stabilizer of component b) per 100 parts by weight of the polymer of component a).

6. A polymer composition according to claim 1, comprising one or more other stabilizers or other additives in addition to components a) and b).

7. A polymer composition according to claim 6, comprising at least one light stabilizer of the class of the sterically hindered amines in addition to components a) and b).

8. A process for stabilizing methyl methacrylate homopolymers or copolymers which contain at least 80% of methyl methacrylate against damage to them by light, oxygen and heat by adding a stabilizer before or after polymerization, wherein the stabilizer used is at least one compound of formula I according to claim 1.

9. A shaped article comprising a polymer composition as defined in claim 1.

10. A shaped article according to claim 9 in the form of a panel or a film.

## Revendications

1. Composition polymère stabilisée contre la dégradation induite par la lumière, par l'oxygène et par la chaleur, contenant
a) un copolymère ou un homopolymère de méthacrylate de méthyle qui contient au moins 80 % de méthacrylate de méthyle sous forme polymère, et
b) en tant que stabilisant au moins un composé d'hydroxyphényltriazine de formule I : 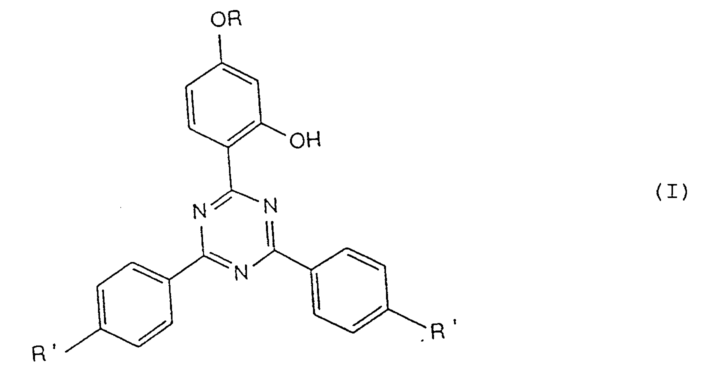 dans laquelle R représente l'hydrogène, un alkyle en C₁-C₁₈, un alkyle en C₂-C₆ substitué par halogène ou alcoxy en C₁-C₁₂ ou un benzyle et
R' représente l'hydrogène ou le méthyle.

2. Composition polymère selon la revendication 1, caractérisée en ce que le composant a) est un homopolymère du méthacrylate de méthyle.

3. Composition polymère selon la revendication 1, caractérisée en ce que le composant b) est un composé de formule I dans laquelle R représente un alkyle en C₁-C₁₂ ou le benzyle.

4. Composition polymère selon la revendication 1, caractérisée en ce que le composant b) est un composé de formule I dans laquelle R représente un alkyle en C₁-C₈ et R' représente l'hydrogène.

5. Composition polymère selon la revendication 1, contenant pour 100 parties en poids du polymère du composant a) de 0,1 à 5 parties en poids du stabilisant du composant b).

6. Composition polymère selon la revendication 1, contenant outre les composants a) et b) un ou plusieurs autres stabilisants ou d'autres adjuvants.

7. Composition polymère selon la revendication 6, contenant outre les composants a) et b) au moins un agent protecteur contre la lumière de type amine à encombrement stérique.

8. Procédé pour la stabilisation des copolymères ou des homopolymères de méthacrylate de méthyle qui contiennent au moins 80 % de méthacrylate de méthyle, contre la dégradation induite par la lumière, par l'oxygène et par la chaleur, par addition d'un stabilisant avant ou après la polymérisation, caractérisé en ce qu'on utilise en tant que stabilisant au moins un composé de formule I selon la revendication 1.

9. Objet moulé contenant la composition polymère définie dans la revendication 1.

10. Objet moulé selon la revendication 9 sous forme d'une plaque ou d'une pellicule.
